# EUROPÄISCHE PATENTSCHRIFT

(11) **EP 1 145 657 B1**
(45) Veröffentlichungstag und Bekanntmachung des Hinweises auf die Patenterteilung: **02.11.2005**
(21) Anmeldenummer: 01107973.8
(22) Anmeldetag: 29.03.2001
(51) Int. Cl.: A41D 27/24

(54) **Markisentuch und Verfahren zu seiner Herstellung**
Florentine blind cloth and method for manufacturing the same
Toile pour store et sa méthode de fabrication

(30) Priorität: 14.04.2000 DE 10018485
(43) Veröffentlichungstag der Anmeldung: 17.10.2001
(73) Patentinhaber: Schmitz-Werke GmbH & Co., 48282 Emsdetten (DE)
(72) Erfinder: Schulz, Wolfgang, Dr., 48565 Steinfurt-Borghorst (DE)
(74) Vertreter: Schneck, Herbert

(56) Entgegenhaltungen:
- EP-A- 0 879 915
- EP-A- 1 002 896
- DE-U- 1 701 495
- US-A- 3 134 703

## Beschreibung

Die Erfindung richtet sich auf ein Markisentuch umfassend eine Mehrzahl längs ihrer Längs-Außenränder zusammengefügter Markisentuchbahnen und ein Verfahren zur Herstellung eines derartigen Markisentuchs.

Tücher für Markisen werden üblicherweise aus Stoffbahnen von 120 cm Breite hergestellt. Dabei werden jeweils zwei aneinander angrenzende Stoffbahnen im Randbereich übereinandergelegt und in der Regel mit einer doppelten Naht miteinander verbunden.

Dieses bekannte Verfahren weist den Vorteil einer hohen Produktivität auf, ist jedoch mit dem Nachteil behaftet, daß sich im Nahtbereich die effektive Dicke der Stoffbahn verdoppelt, wodurch der Wickeldurchmesser auf der Tuchwelle bei abgewickeltem Markisentuch in diesen Bereichen vergrößert wird. Dies führt zu einem sogenannten Tannenbaum-Effekt, indem sich im Tuch aufgrund verschiedener Wickelwege im Bereich der Nähte bzw. im Bereich der dazwischenliegenden nahtfreien Stoffbahnen Falten aufbauen.

Aus der DE 196 02 575 ist ein Verfahren bekannt, wonach die im Bereich der Längs-Außenränder benachbarter Markisenbahnen frei vorstehenden Schußfäden miteinander verzahnt und dann verklebt werden, so daß eine Verbindung von Markisenbahnen ohne wesentliche Dickenerhöhung im Verbindungsbereich erzielt wird. Allerdings ist dieses bekannte Verfahren herstellungstechnisch aufwendig, wenn die Stoffqualität im Nachnahtbereich hinsichtlich Wasserfestigkeit und Reißfestigkeit nicht geschwächt werden soll.

Hiervon ausgehend liegt der Erfindung die Aufgabe zugrunde, ein Markisentuch der eingangs genannten Art zu schaffen, bei welchem die Tuchbahnen einerseits ohne wesentliche Erhöhung der gesamten Tuchdicke und andererseits ohne Beeinträchtigung der Stoffqualität im Fügebereich verbunden sind.

Diese Aufgabe wird erfindungsgemäß dadurch gelöst, daß die Markisentuchbahnen im Bereich ihrer Längs-Außenränder Kettfäden aus thermoplastischem Material aufweisen, und daß die sich überlappenden Randbereiche benachbarter derartiger Markisentuchbahnen mittels dieser thermoplastischen Kettfäden unter zumindest teilweisem Aufschmelzen derselben miteinander verschweißt sind.

Entsprechend wird diese Aufgabe auch gelöst durch ein Verfahren, bei welchem bei der Herstellung der Tuchbahnen in den Bereich der Längs-Außenränder Kettfäden aus thermoplastischem Material eingewebt und zum Verbinden der Tuchbahnen diese Randbereiche übereinander gelegt und verschweißt werden.

Die Verschweißung kann in an sich bekannter Weise mit einem Hochfrequenzgerät, einem Heizkeil mit Andrückrolle o. dgl. erfolgen.

Resultat ist eine Fügestelle, die die gleiche Dicke wie die Tuchgewebebahnen aufweist, und die aus in das thermoplastische Material der Kettfäden eingebetteten Schußfadenenden besteht. Das thermoplastische Material dringt durch den Schweißdruck in die Hohlräume des umgebenden Gewebes ein, was zu einer weiteren Verankerung im Bereich der Fügestelle führt.

Nachfolgend wird die Erfindung anhand eines bevorzugten Ausführungsbeispiels in Verbindung mit der Zeichnung näher erläutert. Dabei zeigen:
- Fig. 1: eine schematische Aufsicht auf die benachbarten Randbereiche zweier zu verbindender Markisentuchbahnen,
- Fig. 2: die Überlappung der Markisentuchbahnen von Fig. 1, und
- Fig. 3: den in Fig. 2 dargestellten Überlappungsbereich nach dem Verschweißen.

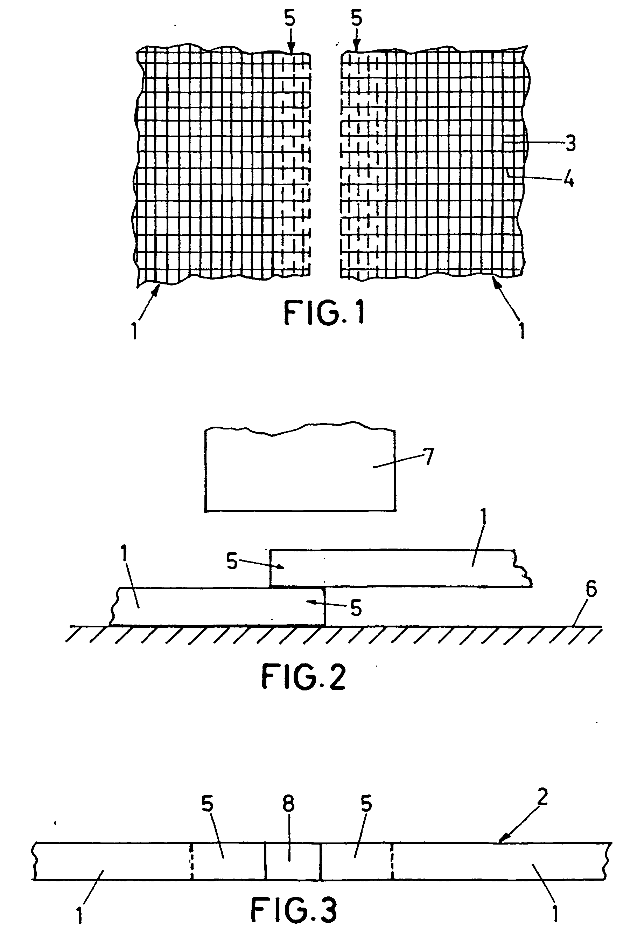

In Fig. 1 sind zwei zusammenzufügende Stoffbahnen 1 dargestellt, wobei mehrere derartige Stoffbahnen 1 ein Markisentuch 2 ausbilden.

Jede Tuchbahn 1 besteht in an sich bekannter Weise aus Kettfäden 3 und Schußfäden 4, die senkrecht zueinander verlaufen. Diese Fäden können aus einem beliebigen Kunst- oder Naturfasergarn bestehen.

In den Randbereichen 5 bestehen demgegenüber die Kettfäden aus einem thermoplastischen Kunststoff, im Ausführungsbeispiel aus PVC.

Zum Verbinden der Tuchbahnen 1 bzw. von deren Randbereichen 5 werden diese Randbereiche 5, wie in Fig. 2 dargestellt, auf einer Unterlage 6 übereinandergelegt und mittels eines Hochfrequenzschweißgerätes 7, welches nur schematisch angedeutet ist, verschweißt.

Hieraus resultiert ein Fügebereich 8, der, wie in Fig. 3 dargestellt, im wesentlichen keine größere Dicke aufweist als die Tuchbahnen 1 selbst. Dieser Fügebereich besteht aus in das thermoplastische Material eingebetteten Enden der Schußfäden 4, wobei das thermoplastische Material auch in die Hohlräume des umgebenden Gewebes eindringt und die Verankerung verstärkt.

Hierdurch wird also eine Verbindung erreicht, die nicht aufträgt und gleichzeitig die Materialeigenschaften im Fügebereich 8 nicht schwächt.

## Patentansprüche

1. Markisentuch umfassend eine Mehrzahl längs ihrer Längs-Außenränder zusammengefügter Markisentuchbahnen, wobei jede Markisentuchbahn durch Kett- und Schußfäden aus Kunst- bzw. Naturfasergarnen gebildet ist, **dadurch gekennzeichnet, daß** die Markisentuchbahnen (1) im Bereich ihrer Längs-Außenränder (5) Kettfäden (3) aus thermoplastischem Material aufweisen, und daß die sich überlappenden Randbereiche (5) benachbarter derartiger Markisentuchbahnen (1) mittels dieser thermoplastischen Kettfäden (3) unter zumindest teilweisem Aufschmelzen derselben miteinander verschweißt sind.

2. Markisentuch nach Anspruch 1, **dadurch gekennzeichnet, daß** die thermoplastischen Kettfäden (3) aus PVC (Polyvinylchlorid) bestehen.

3. Verfahren zur Herstellung eines Markisentuchs nach Anspruch 1 oder 2, **dadurch gekennzeichnet, daß** bei der Herstellung der Tuchbahnen (1) in dem Bereich (5) der Längs-Außenränder Kettfäden (3) aus thermoplastischem Material eingewebt und zum Verbinden der Tuchbahnen (1) diese Randbereiche (5) übereinandergelegt und unter zumindest teilweisen Aufschmelzen derselben miteinander verschweißt werden.

## Claims

1. An awning cloth comprising a plurality of webs of awning cloth that are joined along their longitudinal outer edges, wherein each web of awning cloth is formed by warp threads and weft threads of synthetic or natural filament yarns, **characterized in that** the webs of awning cloth (1) have warp threads (3) of thermoplastic material in the region of their longitudinal outer edges (5), and that the overlapping edge regions (5) of adjacent webs of awning cloth (1) of this type are welded by means of these thermoplastic warp threads (3) under at least partial melting of the same.

2. An awning cloth according to claim 1, **characterized in that** the thermoplastic warp threads (3) are composed of PVC (polyvinylchloride).

3. A process for producing an awning cloth according to claim 1 or 2, **characterized in that** warp threads (3) of thermoplastic material are woven-in in the region (5) of the longitudinal outer edges during production of the webs of cloth (1) and these edge regions (5) are placed over one another and welded under at least partial melting of the same to join the webs of awning cloth (1).

## Revendications

1. Toile pour store comportant une pluralité de bandes de toile pour store assemblées le long de leurs bords extérieurs longitudinaux, chaque bande de toile pour store étant formée par des fils de chaîne ou de trame en fils de fibre synthétique ou naturelle, **caractérisée en ce que** les bandes de toile pour store (1) comprennent dans la zone de leurs bords extérieurs longitudinaux (5) des fils de chaîne (3) en matière thermoplastique, et **en ce que** les zones latérales (5) se chevauchant de ces bandes de toile pour store (1) voisines sont soudées les unes aux autres au moyen de ces fils de chaîne (3) thermoplastiques en fondant lesdits fils au moins en partie.

2. Toile pour store selon la revendication 1, **caractérisée en ce que** les fils de chaîne thermoplastiques (3) sont constitués de PVC (chlorure de polyvinyle).

3. Procédé de fabrication d'une toile pour store selon la revendication 1 ou 2, **caractérisé en ce qu'**à l'occasion de la fabrication des bandes de toile (1), les fils de chaîne (3) en matière thermoplastique sont tissés dans la zone (5) des bords extérieurs longitudinaux, et pour relier les bandes de toile (1), ces zones latérales (5) sont posées les unes sur les autres et entrelacées en fondant lesdits fils au moins en partie.
